# EUROPÄISCHE PATENTSCHRIFT

(11) **EP 4 584 156 B1**
(45) Veröffentlichungstag und Bekanntmachung des Hinweises auf die Patenterteilung: **14.10.2026**
(21) Anmeldenummer: 23772402.6
(22) Anmeldetag: 06.09.2023
(51) Int. Cl.: B64D 11/00

(54) **GEPÄCKFACH FÜR EIN FLUGZEUG**
LUGGAGE COMPARTMENT FOR AN AIRCRAFT
COMPARTIMENT À BAGAGES POUR UN AÉRONEF

(30) Priorität: 06.09.2022 AT 506752022
(43) Veröffentlichungstag der Anmeldung: 16.07.2025
(73) Patentinhaber: FACC AG, 4910 Ried im Innkreis (AT)
(72) Erfinder: KAMMERER, Bernhard, 4755 Zell an der Pram (AT); DOCOLOMANSKY, Matus, 90021 Svaty Jur (SK)
(74) Vertreter: SONN Patentanwälte GmbH & Co KG
(86) Internationale Anmeldenummer: PCT/AT2023/060310
(87) Internationale Veröffentlichungsnummer: WO 2024/050585

(56) Entgegenhaltungen:
- DE-A1- 102016 006 004
- US-A1- 2006 132 007
- US-A1- 2018 319 501

## Beschreibung

Die Erfindung betrifft ein Gepäckfach nach dem Oberbegriff von Anspruch 1.

DE 10 2016 006 004 A1 betrifft ein Überkopf-Gepäckfach für Flugzeuge, welches eine Feder- und Dämpfungseinrichtung aufweist. Die Einrichtung dient dabei der Unterstützung der Bewegung eines unteren Gepäckfachelements von einer Offenstellung in eine Schließstellung. Ein Dämpfungselement der Einrichtung dämpft dabei die Bewegung des Gepäckfachelementes ab.

US 2006/132007 A1 offenbart ein Gepäckfach mit einer Tür, die an der Rückseite einen Stauraum aufweist.

Wie in der WO2014/117198 beschrieben wird, sind Überkopf-Gepäckfächer für Flugzeuge in verschiedenen Ausführungen bekannt. Bei einer Ausführung ist ein feststehendes Gehäuse vorgesehen, welches mit einer nach oben hochschwenkbaren Klappe verschlossen wird. Dieser Typ Gepäckfach wird auch als "shelf bin" bezeichnet. Bei solchen Gepäckfächern ist es seit langem bekannt, Federn einzubauen, um das Hochschwenken der Klappe zu erleichtern (vgl. z.B. DE 10 2016 006 004 A1). Beim Schießen der Klappe werden die Federn gespannt. Eine andere Ausführung von Überkopf-Gepäckfächern sieht hingegen eine absenkbare Schütte vor, in welche das Handgepäck eingelegt werden kann. Diese Gepäckfächer werden als "pivot bins" bezeichnet (vgl. z.B. DE 10 2013 003 364 A1). Nach dem Lösen einer Rasteinrichtung, vielfach als "latch" bezeichnet, wird die Schütte durch die Schwerkraft in die Offenstellung abgesenkt. Damit der Benutzer möglichst wenig Kraft zum Schließen der Schütte aufwenden muss, wird die Schwenkachse zwischen der Schütte und dem Gehäuse in horizontaler Richtung nahe dem gemeinsamen Schwerpunkt von Schütte und Gepäckstück angeordnet. Bei typischen Beladungen wird so erreicht, dass die Schütte auch im beladenen Zustand selbstöffnend ist, d.h. allein durch die Schwerkraft und ohne zusätzlichen Kraftaufwand des Benutzers in die Offenstellung gelangt. In der Praxis hat sich jedoch als Problem herausgestellt, dass die Schütte in bestimmten Beladesituationen ihre selbstöffnenden Eigenschaften verlieren kann, so dass die Schütte beim Öffnen in einem teilweise geöffneten Zustand verharrt. Damit geht zudem einher, dass die manuell in die Offenstellung abgesenkte Schütte teilweise selbstschließend ist, d.h. ohne Einwirkung des Benutzers in den teilweise geöffneten Zustand verschwenkt.

Demgegenüber besteht die Aufgabe der vorliegenden Erfindung darin, die Nachteile der bekannten "pivot bins" zu lindern oder gar zu beheben. Die Erfindung setzt sich bevorzugt zum Ziel, ein Gepäckfach mit absenkbarer Schütte zu schaffen, das unabhängig vom Beladungszustand selbstöffnend ist.

Diese Aufgabe wird mit einem Gepäckfach nach Anspruch 1 und mit einem Flugzeug nach Anspruch 8 gelöst. Bevorzugte Ausführungsformen sind in den abhängigen Ansprüchen angegeben. Erfindungsgemäß ist eine Einrichtung zum Selbstöffnen der Schütte sowohl in einem unbeladenen Zustand als auch in einem mit dem Gepäckstück beladenen Zustand vorgesehen, wobei die Einrichtung zum Selbstöffnen der Schütte eine Federeinrichtung mit einem Federelement aufweist, welches die Schütte in Richtung der Offenstellung drückt, wobei mit Hilfe des Federelements ein solches Öffnungsmoment erzeugt wird, dass die Schütte auch dann selbstöffnend ist, wenn das Gepäckstück hinter der Schwenkachse angeordnet ist.

Der Erfindung liegt zunächst die Erkenntnis zugrunde, dass das Selbstöffnen der Schütte nicht gewährleistet ist, wenn ein kleines, schweres Gepäckstück im hinteren Bereich der Schütte, d.h. auf der von der Ladeöffnung abgewandten Seite bezüglich des Gelenks, platziert wird. In dieser Beladesituation kann der gemeinsame Schwerpunkt von Schütte und Gepäckstück, in horizontaler Richtung gesehen, hinter die Schwenkachse rücken. Dadurch wird ein Schließmoment auf die Schütte ausgeübt, welches ein Selbstöffnen der Schütte verhindert, so dass die Schütte nicht allein durch die Schwerkraft von der Schließ- in die Offenstellung gelangt. Wird die Schütte vom Benutzer in die Offenstellung gezogen, kann das Schließmoment ein teilweises Selbstschließen der Schütte verursachen, d.h. die Schütte verschwenkt von selbst, ohne Eingriff des Benutzers, in den zumindest teilweise geöffneten Zustand. In Kenntnis dieser Ursache des Problems sieht die Erfindung die Einrichtung zum Selbstöffnen der Schütte, d.h. vom Überführen der Schütte von der Schließ- in die Offenstellung allein durch die Schwerkraft, nicht nur in einem unbeladenen Zustand sondern auch in einem mit dem Gepäckstück beladenen Zustand vor. Die Einrichtung zum Selbstöffnen der Schütte ist mit einer Federeinrichtung ausgestattet, bei welcher das Federelement - konträr zu konventionellen Gepäckfächern mit Unterstützung beim Anheben - die Schütte in Richtung der abgesenkten Offenstellung drückt. Durch das Federelement wird ein Öffnungsmoment, d.h. ein in Richtung der Offenstellung wirkendes Drehmoment, auf die Schütte ausgeübt, welche das Selbstöffnen der Schütte unabhängig vom Beladungszustand, insbesondere auch bei Anordnung eines Gepäckstückes im hinteren Bereich der Schütte, gewährleistet.

Für die Zwecke dieser Offenbarung beziehen sich die Orts- und Richtungsangaben, wie "horizontal", "vertikal", "oben", "unten", auf den bestimmungsgemäßen Montagezustand des Gepäckfaches in einer Flugzeugkabine bei horizontal ausgerichtetem Flugzeug. "Vorne" bezieht sich auf die dem Benutzer zugewandte Seite des Gepäckfaches; "hinten auf die vom Benutzer abgewandte Seite des Gepäckfaches.

Die Schütte weist einen Aufnahmeraum für das Gepäckstück auf. Zu diesem Zweck kann die Schütte, wie im Stand der Technik üblich, einen vorzugsweise in Flugzeugrumpf-Längsrichtung langgestreckten Boden zum Aufstellen des Gepäckstücks und zwei Seitenwände an Längsenden des Bodens aufweisen. Die Seitenwände sind quer zur Längsrichtung des Bodens angeordnet und stehen vom Boden hoch. Zudem kann die Schütte eine Einhausung mit einem oberen Wandabschnitt und einem rückseitigen Wandabschnitt, optional zudem mit einem unterseitigen Wandabschnitt separat vom Boden, aufweisen. An der Vorderseite der Schütte ist eine Ladeöffnung ausgebildet, um das Gepäckstück beim Beladen in der Offenstellung der Schütte im Aufnahmeraum anordnen zu können. Die Schütte ist über das Gelenk mit dem Gepäckfachgehäuse verbunden, welches fix, d.h. beim Öffnen der Schütte unbeweglich, in der Flugzeugkabine angeordnet ist.

Das Gepäckfachgehäuse kann, wie im Stand der Technik ebenfalls üblich, zwei Seitenteile aufweisen, welche sich im Wesentlichen parallel zu den Seitenwänden der Schütte erstrecken können. Zudem kann das Gepäckfachgehäuse ein Oberteil, ein Frontteil und ein Rückteil aufweisen. In der Schließstellung kann das Frontteil die Ladeöffnung der Schütte abdecken. Das Rückteil ist auf der von der Ladeöffnung abgewandten Seite des Gepäckfaches vorgesehen.

Bevorzugt ist je ein Gelenk zwischen einer der Seitenwände der Schütte und einem der Seitenteile des Gepäckfachgehäuses vorgesehen. Die Gelenke definieren eine, vorzugsweise in Flugzeugrumpf-Längsrichtung verlaufende, Schwenkachse, um welche die Schütte von der Schließstellung in die vollständig abgesenkte Offenstellung verschwenkt wird. In der Offenstellung ist eine vorderseitige, d.h. dem Benutzer zugewandte, Ladeöffnung freigegeben, welche sich oberhalb einer Ladekante erstreckt. In der Schließstellung ist die vorderseitige Ladeöffnung des Gepäckfachs geschlossen.

Bevorzugt weist das Gepäckfach eine Rasteinrichtung zwischen der Schütte und dem Gepäckfachgehäuse auf. Im verrasteten Zustand der Rasteinrichtung wird die Schütte in der Schließstellung gehalten. Im entrasteten Zustand der Rasteinrichtung wird die Verschwenkung der Schütte von der Schließ- in die Offenstellung freigegeben. Zum Überführen der Rasteinrichtung vom verrasteten in den entrasteten Zustand kann eine Auslöseeinrichtung, insbesondere ein Handgriff, vorgesehen sein.

Als Federelement der Einrichtung zum Selbstöffnen ist bevorzugt eine Kompressionsfeder vorgesehen, welche in der Schließstellung der Schütte stärker gespannt ist als in der Offenstellung der Schütte. Beim Öffnen des Gepäckfaches wird die Kompressionsfeder entspannt, wodurch die beim vorangehenden Schließen des Gepäckfaches gespeicherte Federenergie freigegeben wird. Vorteilhafterweise wird die Schütte durch die Entspannung der Kompressionsfeder selbst dann zuverlässig geöffnet, wenn ein Gepäckfach im hinteren Bereich der Schütte, d.h. im Bereich hinter dem Gelenk, aufgenommen ist. Als Kompressionsfeder ist bevorzugt eine Schraubenfeder vorgesehen.

Um eine unerwünschte Verformung des Federelements quer zu seiner Längsrichtung vorzubeugen, weist die Federeinrichtung bei einer bevorzugten Ausführungsform ein Stützelement auf, welches das Federelement vom einen Längsende zum anderen Längsende des Federelements durchsetzt. Bei dieser Ausführung ist das Federelement außenseitig des Stützelements angeordnet. Dadurch kann sichergestellt werden, dass das Federelement nur in Längsrichtung des Federelements gespannt und entspannt wird. Ein Einbeulen bzw. Knicken gegenüber der Längsrichtung des Federelements wird zuverlässig vermieden.

Bei einer bevorzugten Ausführungsform weist das Stützelement einen Zylinder und einen Kolben auf, wobei der Kolben je nach Spannung des Federelements unterschiedlich weit aus dem Zylinder ausgefahren ist. Mit Hilfe des Zylinder-Kolben-Stützelements wird die Längssteifigkeit der Federeinrichtung erhöht. Um eine Längenanpassung an die Spannung, insbesondere die Kompression, des Federelements zu erzielen, kann der Kolben entsprechend weit aus dem Inneren des Zylinders herausgeführt werden. Bevorzugt ist das Zylinder-Kolben-Stützelement jedoch nicht als Dämpfungselement, insbesondere ohne beim Verschieben des Kolbens gegenüber dem Zylinder verdrängte Flüssigkeit, ausgeführt.

Um die passenden Anbindungspunkte der Federeinrichtung beidseits des Federelements zu schaffen, ist es günstig, wenn das Stützelement zwei Kolben aufweist, welche je nach Spannung des Federelements in entgegengesetzte Richtungen entsprechend aus dem Zylinder ausgefahren sind. Das freie Ende des einen Kolbens kann mit dem Gepäckfachgehäuse, das freie Ende des anderen Kolbens mit der Schütte verbunden sein.

Um ein ruckartiges Öffnen des Gepäckfaches, insbesondere im beladenen Zustand, zu vermeiden, ist bei einer bevorzugten Ausführungsform eine, vorzugsweise von der Federeinrichtung verschiedene, Dämpfereinrichtung zwischen dem Gepäckfachgehäuse und der Schütte vorgesehen, welche die Verschwenkung der Schütte von der Schließ- in die Offenstellung dämpft. Die Dämpfereinrichtung weist ein Dämpferelement, insbesondere eine Zylinder-Kolben-Einheit mit einem von der Bewegung des Kolbens verdrängten Flüssigkeitsvolumen, auf.

Bei einer bevorzugten Ausführungsform sind eine erste Halterung am Gepäckfachgehäuse und eine zweite Halterung an der Schütte vorgesehen, wobei erste Längsenden jeweils der Federeinrichtung und der Dämpfereinrichtung an der ersten Halterung und zweite Längsenden jeweils der Federeinrichtung und der Dämpfereinrichtung an der zweiten Halterung, vorzugsweise verschwenkbar, montiert sind.

Die Erfindung wird nachstehend anhand eines in den Zeichnungen dargestellten Ausführungsbeispiels weiter erläutert.
Fig. 1 zeigt ein erfindungsgemäßes Überkopf-Gepäckfach mit einer Schütte in der Schließstellung.
Fig. 2 zeigt das Überkopf-Gepäckfach der Fig. 1 in der Offenstellung.
Fig. 3 und Fig. 4 zeigen teilweise ausgeschnittene Schnittansichten des Überkopf-Gepäckfaches in der Schließstellung gemäß Fig. 1 bzw. in der Offenstellung gemäß Fig. 2.
Fig. 5 zeigt eine Feder- und Dämpfereinrichtung in einem gespannten Zustand der Federeinrichtung entsprechend der Schließstellung des Überkopf-Gepäckfaches der Fig. 1 und 2.
Fig. 6 zeigt die Feder- und Dämpfereinrichtung der Fig. 3 im entspannten Zustand der Federeinrichtung entsprechend der Offenstellung des Überkopf-Gepäckfachs der Fig. 1 und 2.

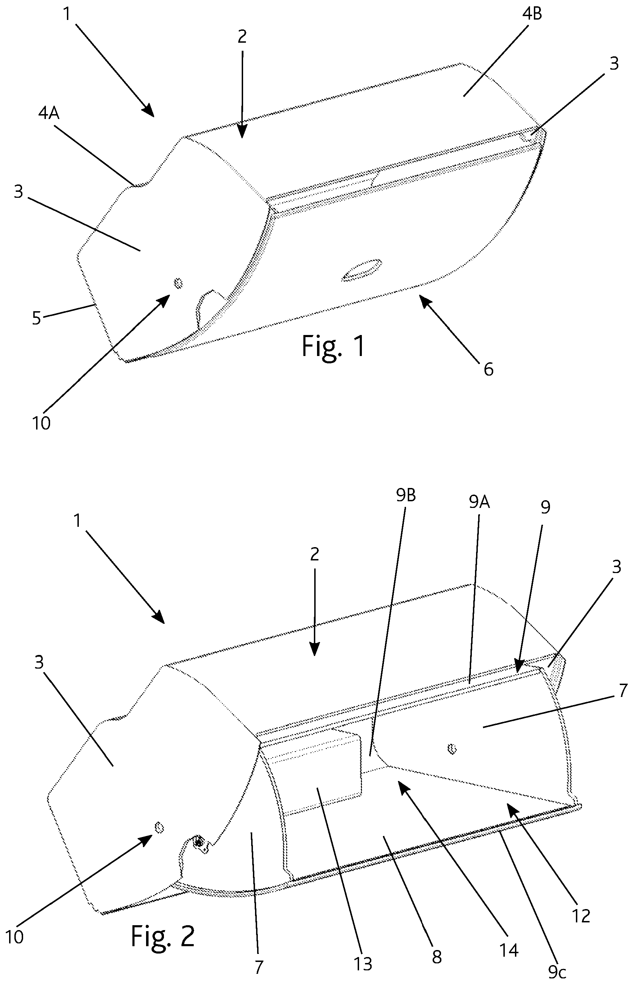

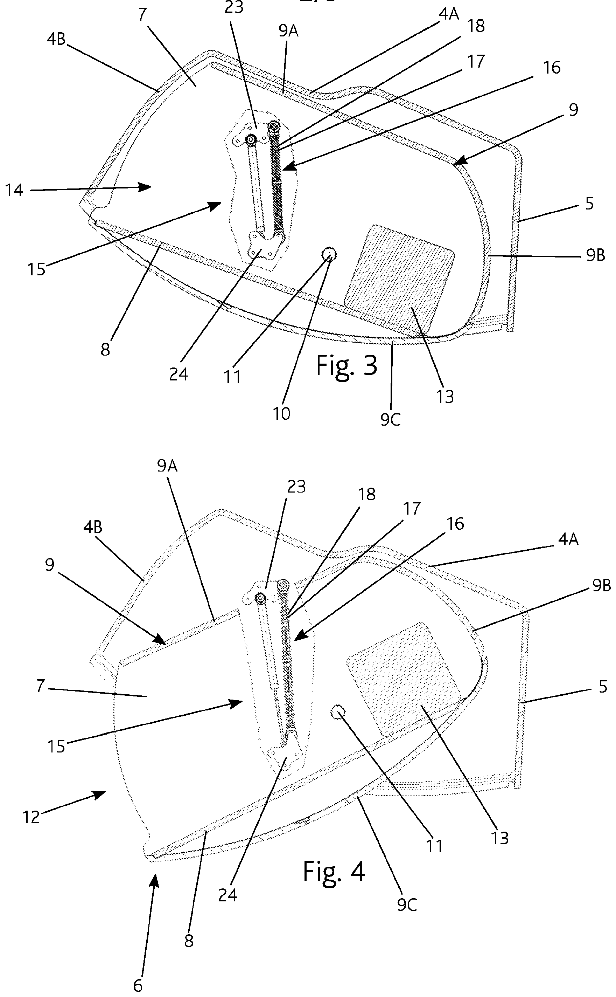

Die Zeichnungen zeigen ein Überkopf-Gepäckfach 1, welches in einer Flugzeugkabine eines (nicht dargestellten) Flugzeuges installiert wird. Das Überkopf-Gepäckfach 1 weist ein nach unten offenes Gepäckfachgehäuse 2 mit zwei gegenüberliegenden Seitenteilen 3, einem Oberteil 4A, einem Frontteil 4B und einem Rückteil 5 auf. Das Gepäckfachgehäuse 2 ist stillstehend, d.h. beim Öffnen des Gepäckfaches 1 unbeweglich, am Flugzeugrumpf angeordnet. Am Gepäckfachgehäuse 2 ist eine nach vorne offene Schütte 6 verschwenkbar angeordnet. Die Schütte 6 weist zwei Seitenwände 7, einen Boden 8 und eine Einhausung 9 mit einem oberen Wandabschnitt 9A, einem rückseitigen Wandabschnitt 9B und einem unterseitiger Wandabschnitt 9C, auf dem der Boden 8 angeordnet ist, auf. Zur verschwenkbaren Anordnung der Schütte 6 sind Gelenke 10 zwischen den Seitenwänden 7 der Schütte 6 und den Seitenteilen 3 des Gepäckfachgehäuses 2 vorgesehen. Die Gelenke 10 definieren eine horizontale Schwenkachse 11, um welche die Schütte 6 von einer in Fig. 1 und Fig. 3 gezeigten Schließstellung in eine in Fig. 2 und Fig. 4 gezeigte Offenstellung absenkbar ist. In der Offenstellung ist eine vorderseitige Ladeöffnung 12 freigegeben, so dass ein Gepäckstück 13 in einen von den Seitenwänden 7, dem Boden 8, dem oberen Wandabschnitt 9A und dem rückseitigen Wandabschnitt 9B begrenzten Aufnahmeraum 14 der Schütte 6 eingeführt werden kann. In der Schließstellung ist die vorderseitige Ladeöffnung 12 des Gepäckfachs 1 geschlossen, indem die Ladeöffnung 12 vom Frontteil 4B des Gehäuses 2 abgedeckt ist. Das Gepäckfach 1 weist eine zwischen der Schütte 6 und dem Gepäckfachgehäuse 2 wirkende Rasteinrichtung (nicht gezeigt) auf. Im verrasteten Zustand der Rasteinrichtung wird die Schütte 6 in der Schließstellung gehalten. Im entrasteten Zustand der Rasteinrichtung wird die Verschwenkung der Schütte 6 von der Schließ- in die Offenstellung, vorzugsweise um mehr als 30°, insbesondere um mehr als 40°, um die währenddessen stationäre Schwenkachse 11 freigegeben. Zum Überführen der Rasteinrichtung vom verrasteten in den entrasteten Zustand kann eine Auslöseeinrichtung, insbesondere ein Handgriff, vorgesehen sein.

Wenn ein kleines, schweres Gepäckstück 13 (vgl. Fig. 3 und Fig. 4) im hinteren Bereich des Aufnahmeraums 14 der Schütte 6 platziert wird, könnte der gemeinsame Schwerpunkt von Schütte 6 und Gepäckstück 13 hinter die Schwenkachse 11 rücken. Dadurch würde ein Schließmoment entstehen, welches ein Selbstschließen des Gepäckfaches 1 im geöffneten Zustand bewirken oder das Selbstöffnen des Gepäckfaches 1 im geschlossenen, aber entrasteten Zustand verhindern könnte.

Um dieses Problem zu vermeiden, weist das Gepäckfach 1 in der gezeigten Ausführung eine Einrichtung 15 zum Selbstöffnen der Schütte 6 nicht nur in einem unbeladenen Zustand, d.h. mit leerem Aufnahmeraum 14, sondern auch in einem beladenen Zustand. Die Einrichtung 15 zum Selbstöffnen der Schütte 6 im entrasteten Zustand der Rasteinrichtung weist eine Federeinrichtung 16 mit einem Federelement 17 auf, welches die Schütte 6 bis in die vollständige Offenstellung drückt. Mit Hilfe des Federelement 17 wird ein solches Öffnungsmoment erzeugt, dass die Schütte 6 auch dann selbstöffnend, d.h. ohne Kraft des Benutzers öffnend, ist, wenn das Gepäckstück 13 hinter der Schwenkachse 11 angeordnet ist. Zu diesem Zweck wirkt das Federelement 17 auf den vorderen Teil der Schütte 6, welcher sich vom Gelenk 10 bis zu der dem Benutzer zugewandten vorderen Ladekante erstreckt. Bevorzugt ist an gegenüberliegenden Längsenden des Gepäckfaches 1 jeweils eine solche Einrichtung 15 vorgesehen, wobei die nachstehenden Erläuterungen gleichermaßen auf beide Einrichtungen 15 zutreffen.

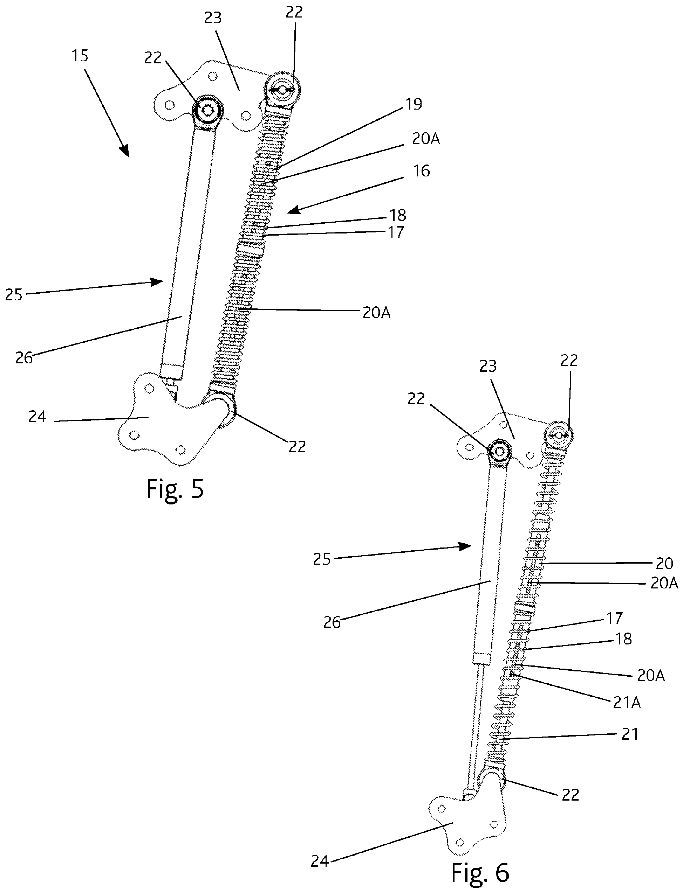

Wie aus Fig. 5 und Fig. 6 ersichtlich, ist als Federelement 17 in der gezeigten Ausführung eine Kompressionsfeder 18, hier in Form einer Schraubenfeder, vorgesehen, welche in der Schließstellung der Schütte 6 stärker gespannt ist als in der Offenstellung der Schütte 6. Beim Öffnen der Schütte 6 wird die Kompressionsfeder 18 entspannt, so dass ein Öffnungsmoment auf die Schütte 6 (zusätzlich zu dem resultierenden Moment aufgrund der Schwerkraft) aufgebracht wird.

Wie aus Fig. 5 und Fig. 6 weiters ersichtlich, weist die Federeinrichtung 16 in der gezeigten Ausführung ein Stützelement 19 auf, welches das Federelement 17 der Länge nach, d.h. vom einen Längsende des Federelements 17 bis zum anderen Längsende des Federelements 17, durchsetzt. Das Stützelement 19 weist einen Zylinder 20 und zwei Kolben 21 auf, welche in entgegengesetzte Richtungen um von der Spannung des Federelements 17 abhängige Strecken aus dem Zylinder 20 ausgefahren sind. Der Zylinder 20 hat Langlöcher 20A, in welchen mit den Kolben 21 verbundene Anschlagteile 21A geführt sind, um die Verschiebungen der Kolben 21 unter der Wirkung des Federelements 17 gegenüber dem Zylinder 20 zu begrenzen.

An den freien Enden der Kolben 21 sind aus dem Federelement 17 vorstehende Verbindungselemente 22 vorgesehen, welche verschwenkbar mit einer ersten Halterung 23 am Gepäckfachgehäuse 2 bzw. einer zweiten Halterung 24 an der Schütte 6 verbunden sind.

Wie aus Fig. 5 und Fig. 6 weiters ersichtlich, ist zudem eine Dämpfereinrichtung 25 zwischen dem Seitenteil 3 des Gepäckfachgehäuses und der Seitenwand 7 der Schütte 6 vorgesehen. Mit Hilfe der Dämpfereinrichtung 25 wird die Verschwenkung der Schütte von der Schließ- in die Offenstellung gedämpft, jedoch keine Federkraft, und damit auch kein zusätzliches statisches Öffnungs- oder Schließmoment, auf die Schütte 6 aufgebracht. Die Dämpfereinrichtung 25 weist einen Zylinder-Kolben-Dämpfer 26 auf. Das eine Längsende des Zylinder-Kolben-Dämpfers 26 ist verschwenkbar mit der ersten Halterung 23, das andere Längsende des Zylinder-Kolben-Dämpfers ist verschwenkbar mit der zweiten Halterung 24 verbunden.

### Bezugsziffernliste:

1 Gepäckfach
2 Gepäckfachgehäuse
3 Seitenteile des Gepäckfachgehäuses
4A Oberteil des Gepäckfachgehäuses
4B Frontteil des Gepäckfachgehäuses
5 Rückteil des Gepäckfachgehäuses
6 Schütte
7 Seitenwände der Schütte
8 Boden der Schütte
9 Einhausung der Schütte
9A oberer Wandabschnitt der Einhausung
9B rückseitiger Wandabschnitt der Einhausung
9C unterseitiger Wandabschnitt der Einhausung
10 Gelenke
11 Schwenkachse
12 Ladeöffnung
13 Gepäckstück
14 Aufnahmeraum
15 Einrichtung
16 Federeinrichtung
17 Federelement
18 Kompressionsfeder
19 Stützelement
20 Zylinder
20A Langlöcher 20A
21 Kolben
21A Anschlagteile
22 Verbindungselemente
23 erste Halterung
24 zweite Halterung
25 Dämpfereinrichtung
26 Zylinder-Kolben-Dämpfer

## Patentansprüche

1. Gepäckfach (1) für ein Flugzeug, aufweisend:
ein Gepäckfachgehäuse (2),
eine Schütte (6) zur Aufnahme eines Gepäckstückes (13),
ein eine Schwenkachse (11) definierendes Gelenk (10) zwischen dem Gepäckfachgehäuse (2) und der Schütte (6), wobei die Schütte (6) durch Verschwenkung um das Gelenk (10) von einer Schließstellung in eine Offenstellung absenkbar ist, wobei das Gepäckstück (13) hinter der Schwenkachse (11), auf der von einer Ladeöffnung abgewandten Seite bezüglich des Gelenks (10), anordenbar ist,
**gekennzeichnet durch**
eine Einrichtung (15) zum Selbstöffnen der Schütte (6) sowohl in einem unbeladenen Zustand als auch in einem mit dem Gepäckstück (13) beladenen Zustand,
wobei die Einrichtung (15) zum Selbstöffnen der Schütte (6) eine Federeinrichtung (16) mit einem Federelement (17) aufweist, welches die Schütte (6) in Richtung der Offenstellung drückt, wobei mit Hilfe des Federelements (17) ein solches Öffnungsmoment erzeugt wird, dass die Schütte (6) auch dann selbstöffnend ist, wenn das Gepäckstück (13) hinter der Schwenkachse (11) angeordnet ist.

2. Gepäckfach (1) nach Anspruch 1, **dadurch gekennzeichnet, dass** als Federelement (17) eine Kompressionsfeder (18) vorgesehen ist, welche in der Schließstellung der Schütte (6) stärker gespannt ist als in der Offenstellung der Schütte (6).

3. Gepäckfach (1) nach Anspruch 1 oder 2, **dadurch gekennzeichnet, dass** die Federeinrichtung (16) ein Stützelement (19) aufweist, welches das Federelement (17) von einem Längsende zu einem anderen Längsende des Federelements (17) durchsetzt.

4. Gepäckfach (1) nach Anspruch 3, **dadurch gekennzeichnet, dass** das Stützelement (19) einen Zylinder (20) und einen Kolben (21) aufweist, wobei der Kolben (21) je nach Spannung des Federelements (17) unterschiedlich weit aus dem Zylinder (20) ausgefahren ist.

5. Gepäckfach (1) nach Anspruch 4, **dadurch gekennzeichnet, dass** das Stützelement (19) noch einen Kolben (21) aufweist, wobei die zwei Kolben (21) je nach Spannung des Federelements (17) in entgegengesetzte Richtungen aus dem Zylinder (20) ausgefahren sind.

6. Gepäckfach (1) nach einem der Ansprüche 1 bis 5, **dadurch gekennzeichnet, dass** eine Dämpfereinrichtung (25) zwischen dem Gepäckfachgehäuse (2) und der Schütte (6) vorgesehen ist, welche die Verschwenkung der Schütte (6) von der Schließ- in die Offenstellung dämpft.

7. Gepäckfach (1) nach Anspruch 6, **dadurch gekennzeichnet, dass** eine erste Halterung am Gepäckfachgehäuse (2) und eine zweite Halterung an der Schütte (6) vorgesehen sind, wobei erste Längsenden jeweils der Federeinrichtung (16) und der Dämpfereinrichtung (25) an der ersten Halterung und zweite Längsenden jeweils der Federeinrichtung (16) und der Dämpfereinrichtung (25) an der zweiten Halterung montiert sind.

8. Flugzeug mit einem Gepäckfach (1) nach einem der Ansprüche 1 bis 7.

## Claims

1. A luggage compartment (1) for an aircraft, comprising:
a luggage compartment housing (2),
a chute (6) for receiving a piece of luggage (13),
a joint (10) defining a pivot axis (11) between the luggage compartment housing (2) and the chute (6), wherein the chute (6) is lowerable from a closed position into an open position by pivoting about the joint (10), wherein the piece of luggage (13) is arrangeable behind the pivot axis (11), on the side facing away from a loading opening with respect to the joint (10),
**characterized by**
a device (15) for self-opening the chute (6) both in an unloaded state and in a state loaded with the piece of luggage (13),
wherein the device (15) for self-opening the chute (6) comprises a spring device (16) having a spring element (17) which pushes the chute (6) in the direction of the open position, wherein
such an opening moment is generated by means of the spring element (17) that the chute (6) is self-opening even when the piece of luggage (13) is arranged behind the pivot axis (11).

2. The luggage compartment (1) according to claim 1, **characterized in that** a compression spring (18) is provided as the spring element (17), which is more highly tensioned in the closed position of the chute (6) than in the open position of the chute (6).

3. The luggage compartment (1) according to claim 1 or 2, **characterized in that** the spring device (16) comprises a support element (19) which passes through the spring element (17) from one longitudinal end to another longitudinal end of the spring element (17).

4. The luggage compartment (1) according to claim 3, **characterized in that** the support element (19) comprises a cylinder (20) and a piston (21), wherein the piston (21) is extended out of the cylinder (20) to different extents depending on the tension of the spring element (17).

5. The luggage compartment (1) according to claim 4, **characterized in that** the support element (19) comprises a further piston (21), wherein the two pistons (21) are extended out of the cylinder (20) in opposite directions depending on the tension of the spring element (17).

6. The luggage compartment (1) according to any one of claims 1 to 5, **characterized in that** a damper device (25) is provided between the luggage compartment housing (2) and the chute (6), which damps the pivoting of the chute (6) from the closed position into the open position.

7. The luggage compartment (1) according to claim 6, **characterized in that** a first bracket on the luggage compartment housing (2) and a second bracket on the chute (6) are provided, wherein first longitudinal ends of the spring device (16) and of the damper device (25), respectively, are mounted to the first bracket, and second longitudinal ends of the spring device (16) and of the damper device (25), respectively, are mounted to the second bracket.

8. An aircraft comprising a luggage compartment (1) according to any one of claims 1 to 7.

## Revendications

1. Compartiment à bagages (1) pour un avion, comprenant :
un boîtier de compartiment à bagages (2),
un baquet (6) pour la réception d'un bagage (13),
une articulation (10) définissant un axe de pivotement (11) entre le boîtier de compartiment à bagages (2) et le baquet (6), dans lequel le baquet (6) peut être abaissé par pivotement autour de l'articulation (10) d'une position de fermeture dans une position d'ouverture, dans lequel le bagage (13) peut être agencé derrière l'axe de pivotement (11), sur le côté détourné d'une ouverture de chargement par rapport à l'articulation (10),
**caractérisé par**
un dispositif (15) pour l'ouverture automatique du baquet (6) aussi bien dans un état non chargé que dans un état chargé avec le bagage (13),
dans lequel le dispositif (15) pour l'ouverture automatique du baquet (6) comprend un dispositif à ressort (16) avec un élément de ressort (17), lequel pousse le baquet (6) en direction de la position d'ouverture, dans lequel, à l'aide de l'élément de ressort (17), un tel couple d'ouverture est généré que le baquet (6) est à ouverture automatique même lorsque le bagage (13) est agencé derrière l'axe de pivotement (11).

2. Compartiment à bagages (1) selon la revendication 1, **caractérisé en ce qu'**il est prévu, en tant qu'élément de ressort (17), un ressort de compression (18) qui est plus fortement tendu dans la position de fermeture du baquet (6) que dans la position d'ouverture du baquet (6).

3. Compartiment à bagages (1) selon la revendication 1 ou 2, **caractérisé en ce que** le dispositif à ressort (16) comprend un élément de support (19) qui traverse l'élément de ressort (17) d'une extrémité longitudinale à une autre extrémité longitudinale de l'élément de ressort (17).

4. Compartiment à bagages (1) selon la revendication 3, **caractérisé en ce que** l'élément de support (19) comprend un cylindre (20) et un piston (21), dans lequel le piston (21) est sorti du cylindre (20) à des distances différentes selon la tension de l'élément de ressort (17).

5. Compartiment à bagages (1) selon la revendication 4, **caractérisé en ce que** l'élément de support (19) comprend encore un autre piston (21), dans lequel les deux pistons (21) sont sortis du cylindre (20) dans des directions opposées selon la tension de l'élément de ressort (17).

6. Compartiment à bagages (1) selon l'une des revendications 1 à 5, **caractérisé en ce qu'**un dispositif d'amortissement (25) est prévu entre le boîtier de compartiment à bagages (2) et le baquet (6), lequel amortit le pivotement du baquet (6) de la position de fermeture vers la position d'ouverture.

7. Compartiment à bagages (1) selon la revendication 6, **caractérisé en ce qu'**un premier support sur le boîtier de compartiment à bagages (2) et un deuxième support sur le baquet (6) sont prévus, dans lequel des premières extrémités longitudinales, respectivement du dispositif à ressort (16) et du dispositif d'amortissement (25), sont montées sur le premier support, et des deuxièmes extrémités longitudinales, respectivement du dispositif à ressort (16) et du dispositif d'amortissement (25), sont montées sur le deuxième support.

8. Avion comprenant un compartiment à bagages (1) selon l'une des revendications 1 à 7.
